# EUROPEAN PATENT APPLICATION

(11) **EP 2 489 649 A1**
(43) Date of publication of application: **22.08.2012**
(21) Application number: 10823210.9
(22) Date of filing: 15.10.2010
(51) Int. Cl.: C06D 5/00, B01J 7/00, C06B 21/00, C06B 29/02, C06B 43/00, B60R 21/264

(54) **GAS GENERATING AGENT COMPOSITION, MOLDED PRODUCT OF THE COMPOSITION, AND GAS GENERATION DEVICE EQUIPPED WITH THE MOLDED PRODUCT**

(30) Priority: 15.10.2009 JP 2009238136
(71) Applicant: Nipponkayaku Kabushikikaisha, Tokyo 102-8172 (JP)
(72) Inventor: HIRONAKA, Akitoshi, Himeji-shi Hyogo 679-2123 (JP); TOMIOKU, Yuji, Himeji-shi Hyogo 679-2123 (JP); KATO, Masahiro, Himeji-shi Hyogo 679-2123 (JP); SATO, Eishi, Himeji-shi Hyogo 679-2123 (JP)
(74) Representative: Gray, James
(86) International application number: PCT/JP2010/006142
(87) International publication number: WO 2011/045942

(57) **Abstract**

The present invention relates to a gas generating agent composition containing pentaerythritol, perchlorate and a water-soluble polymeric binder agent. The gas generating agent composition may provide a gas generating agent excellent in heat resistance and anti-hygroscopicity. A gas generator which is loaded with the gas generating agent composition is preferably applicable as a gas generator for activating vehicle safety devices installed on the exterior of the vehicle. This may improve the reliability of vehicle safety devices.

## Description

### TECHNICAL FIELD

The present invention generally relates to a gas generating agent composition for use in gas generators for vehicle safety devices, a molded product thereof and a method of producing the same. Particularly, the present invention relates to a gas generating agent composition which has better heat resistance and anti-hygroscopicity, a molded product obtained by using the gas generating agent composition, a method of producing the same and use thereof. More particularly, the present invention relates to a gas generator obtained by using the gas generating agent composition, and a hood-lifting device.

### RELATED ART

As a measure to increase safety in automobile crashes, automobiles are now being equipped with various safety devices using a gas generator having an explosive as its actuator. Among these safety devices, as devices for protecting passengers at the time of vehicle collision, airbags and seatbelt pretensioners are known and have been in wide use. Airbags and seatbelt pretensioners work in principle by detecting a vehicle collision by sensors, actuating an igniter using electrical signals, generating gas by combustion of a gas generating agent composition which is loaded into a gas generator, and actuating a safeguard mechanism by means of the pressure of the resulting gas. That is, in airbags, protection of occupants can be achieved by deploying airbags between an occupant and inner walls of the vehicle body using gas pressure, while, in seatbelt pretensioners, by actuating a seat belt retractor using gas pressure to restrain an occupant with a seat belt.

A gas generator using an explosive as its actuator is a device arrangement that achieves so performance that the maximum pressure of the generated gas can be reached in several tens of milliseconds after receiving an electric signal from a sensor and thus electrical signals can be quickly transformed into pressure energy. As such, among those safety devices requiring high responsivity, a safeguard mechanism which employs a gas generator using an explosive as its actuator exhibits excellent responsivity and actuating force and has been commonly used.

Meanwhile, conventional vehicle safety devices using explosives were installed in the occupant space, i.e., the interior of the vehicle in order to protect the vehicle passengers from collision with vehicle interior walls.

However, increasing safety measures have been taken recently to protect against automobile crashes, and a range of usage scenarios have been developed correspondingly on using these vehicle safety devices. For example, such usage scenarios involve installation of the following: a device for absorbing the collision impact experienced by pedestrians, motorcycle riders and so on; an impact absorbing device for absorbing the impact experienced by a person who is hit by and thrown up onto the vehicle; a device (roll bar) for preventing crushes at the time of a vehicle rollover accident; an airbag for absorbing rollover impact on motorcycles, and so on.
These safety devices including impact absorbing devices are installed on the exterior of the vehicle, unlike the conventionally installed safety devices. For example, these devices are supposed to be installed at a position where they are exposed to the outside environment, such as near the front and rear bumpers of the vehicle, under the hood, inside the engine compartment or on top of the vehicle, or alternatively at a site in a more severe hygrothermal environment, e.g., a site near a heat source such as the engine and where moisture builds up.

Therefore, gas generators loaded to activate these safety devices are required to have higher environmental resistance and heat resistance than conventional gas generators.

It should be noted here that a gas generating agent composition is generally obtained by containing a mixture composition of a fuel component and an oxidizer component as a principal component, adding a binder agent and preparing a molded product with specified combustion characteristics, and further prepared in combination with different additives, such as a combustion regulating agent or slag forming agent. As a fuel component, nitrogen-containing organic compounds become dominant recently in place of conventionally-used metallic azides. Also used is a non-azide-based gas generating agent composition that is obtained by combining these compounds and inorganic and/or organic oxidizers. Conventional gas generating agents prepared by these gas generating agent compositions are applied to a gas generator for airbag deployment or a gas generator for seatbelt pretensioners, which is installed in the interior of the vehicle. The environmental resistance of the gas generator is tested by a severe test at 107 °C for 400 hours to ensure its heat-aging stability.

However, if a gas generator is installed on a site exposed to the outdoor temperature and humidity environment, this may cause degradation in the physical properties and quality of the gas generating agent composition loaded into the gas generator due to heat and/or moisture. Since degradation in the physical properties and quality of the gas generating agent composition has serious influence on the quick and assured responsivity of the vehicle safety device, the above-mentioned quality criteria are inadequate. There is thus a need for a gas generating agent composition with its heat-aging stability ensured by a severe test under an increased temperature condition of 120 °C for 400 hours, more preferably 130 °C for 400 hours.

Accordingly, to install a gas generator on the exterior of the vehicle, it is essential to develop a gas generating agent composition which exhibits better environmental resistance and heat resistance without being affected by heat and/or moisture.
That is, there is a demand for a gas generating agent composition to offer higher performance in heat resistance and anti-hygroscopicity over the gas generating agent compositions used in conventional gas generators for airbag deployment or for seatbelt pretensioners.

As a gas generating agent composition that is different from conventional products, for example, Patent Document 1 discloses, as a gas generating agent composition having better emission characteristics, a flammable composition for vehicle safety devices which contains pentaerythritol as a fuel component, an oxidizer and fluoroelastomer as a binder agent. This gas generating agent composition is formed into a gas generating agent molded product of a predetermined shape, by being added and mechanically mixed with acetone, followed by addition of n-hexane, and then preparing a granular powder using the coprecipitation process.

However, the flammable composition for vehicle safety devices as disclosed in Patent Document 1 is unfavorable from the viewpoint of production safety. This is because, in producing a pyrotechnic product containing a powerful oxidizer, such a flammable composition forces production of a pyrotechnic product with the use of and in coexistence with acetone, n- hexane or the like, which represents a flammable liquid. In addition, production methods involving the discharge of solvent wastes from coprecipitation process incur the risk of discharging flammable solvent wastes that contain pyrotechnic products. Further, these production methods are not considered as environmentally friendly methods because of their discharging of solvents. Additionally, such gas generating agent compositions are used in the form of granular powder and are difficult to be formed into a molded product of a desired shape. This presents difficulties in control of combustion speed based on the molded product shape design.

### RELATED ART DOCUMENT

### PATENT DOCUMENT

Patent Document 1: U. S. Patent No. 6,136,111

### DISCLOSURE OF THE INVENTION

### PROBLEMS TO BE SOLVED BY THE INVENTION

Therefore, the present invention is directed to a gas generating agent composition for use in gas generators for vehicle safety devices. An object of the present invention is to provide a gas generating agent composition having better heat resistance and anti-hygroscopicity that may be used in severe environments under high temperature and high humidity conditions, a molded product of a gas generating agent composition using the same, use thereof and a method of producing the same. Another object of the present invention is to provide a gas generating agent composition which allows a gas generating agent molded product to be obtained by a highly safe production process, i.e., without using a large amount of flammable organic solvents during the production process as the required performance for a gas generating agent composition, and a molded product of a gas generating agent composition using the same. In still another aspect, for a gas generator showing heat/humidity resistance and mounted on the exterior of the vehicle, such as inside the hood compartment, the present invention provides a gas generator mounted on the exterior of the vehicle, which exhibits less time-dependent deterioration in its gas evolution characteristics, and a hood-lifting device.

### MEANS FOR SOLVING THE PROBLEM

As a result of intensive studies for solving the above problems, the inventors have found that a gas generating agent composition which contains pentaerythritol as a fuel component, perchlorate as an oxidizer, and a water-soluble polymeric binder agent exhibits significantly improved environmental resistance characteristics and good formability during a safe preparation process, and that the resulting molded product also shows improved environmental resistance.

That is, the present invention is as follows.
(1) A gas generating agent composition containing: pentaerythritol; perchlorate; and a water-soluble polymeric binder agent.
(2) The gas generating agent composition according to (1), wherein the water-soluble polymeric binder agent is selected from the group consisting of hydroxypropylmethylcellulose, hydroxyethylmethylcellulose, methylcellulose, polyacrylamide, polyvinylpyrrolidone, polyvinyl alcohol, carboxymethylcellulose and salts thereof, as well as combinations of more than one of these components.
(3) The gas generating agent composition according to (1) or (2), wherein a content of the pentaerythritol is 10-30% by mass, a content of the perchlorate is 50-89% by mass, and a content of the water-soluble polymeric binder agent is 1-10% by mass.
(4) The gas generating agent composition according to any one of (1)-(3), wherein the gas generating agent further comprises a molding aid.
(5) A gas generating agent molded product obtained by molding the gas generating agent composition according to any one of (1)-(4).
(6) A gas generating agent molded product obtained by allowing the gas generating agent composition according to any one of (1)-(4) to be added and kneaded with water and then subjected to extrusion molding, followed by heat treatment.
(7) The gas generating agent molded product according to (6), wherein the heat treatment is heat treatment of 50-120 °C for 10-30 hours.
(8) A gas generator installed on the exterior of the vehicle using the gas generating agent molded product according to any one of (5)-(7).
(9) The gas generator installed on the exterior of the vehicle according to (8), wherein the gas generator is for use in a device installed under an automobile hood and operable to lift the hood.
(10) A gas generator for a hood-lifting device installed on the exterior of the vehicle, wherein the gas generator is obtained by using the gas generating agent molded product according to any one of (5)-(7).
(11) Use of the gas generating agent molded product according to any one of (5)-(7) as a gas generator installed on the exterior of the vehicle.
(12) Use of the gas generating agent molded product according to any one of (5)-(7) as a gas generator for a hood-lifting device installed on the exterior of the vehicle.
(13) A method of producing a gas generating agent molded product by molding the gas generating agent composition according to any one of (1)-(4).
(14) The method of producing a gas generating agent molded product according to (13), wherein the gas generating agent composition is added and kneaded with water and then subjected to extrusion molding, followed by heat treatment.
(15) The method of producing a gas generating agent molded product according to (14), wherein the heat treatment is heat treatment of 50-120 °C for 10-30 hours.
(16) A hood-lifting device for lifting an automobile hood by using the gas generating agent molded product according to any one of (5)-(7).

### EFFECT OF THE INVENTION

In the gas generating agent composition according to the present invention, the use of pentaerythritol as a fuel component which is neither an explosive nor a hazardous material may make the composition easier to handle and less costly, while the use of a water-soluble polymeric binder, for example, allows the composition to be added and kneaded with water and then subjected to extrusion molding. This may result in improved safety in the production of the gas generating agent composition over using conventional organic solvents. Moreover, the present invention does not generate any waste, such as solvent waste, which may provide a production method with reduced environmental load.

In addition, a gas generating agent composition according to the present invention may have a weight loss rate of the gas generating agent of 1.0% or less in a severe heating test setting of 120 °C for 400 hours, or 140 °C for 400 hours, while showing a weight change of the gas generating agent of 1.0% or less in a humidification test setting of normal temperature and 93% relative humidity for 50 hours. Accordingly, the present invention may provide a gas generating agent composition having better heat resistance and anti-hygroscopicity.
Therefore, the present invention is applicable to a gas generating agent composition for gas generators installed in severe environments under high temperature and/or high humidity conditions.

### BRIEF DESCRIPTION OF THE DRAWINGS

FIG. 1 illustrates an aspect of a gas generator according to the present invention;
FIG. 2 illustrates another aspect of the gas generator according to the present invention; and
FIG. 3 illustrates an aspect of a small gas generator according to the present invention.

### BEST MODE FOR CARRYING OUT THE INVENTION

The present invention will now be described in detail below.
A gas generating agent composition according to the present invention is characterized by containing pentaerythritol, perchlorate and a water-soluble polymeric binder agent.

Pentaerythritol applied in the gas generating agent composition of the present invention corresponds to a fuel component, which generates gas mainly by combustion of the gas generating agent composition. Since the fuel component, pentaerythritol, does not contain a nitrogen component, the generated gas cannot produce a toxic gas component of nitrogen oxide (NOx) if pentaerythritol is used alone. This may mitigate the discharge of toxic gas component. This is why pentaerythritol is particularly preferable. The pentaerythritol used in the present invention preferably has 90% or more purity, 45% or more hydroxyl groups and 1.0% or less moisture; more preferably, 95% or more purity, 47% or more hydroxyl groups and 0.5% or less moisture.

In the gas generating agent composition according to the present invention, the perchlorate applied corresponds to an oxidizer component, which supplies oxygen to a combustive component containing a fuel component and promotes combustion. As the oxidizer component, independent use of this perchlorate is particularly preferable in view of environmental resistance ability.

Examples of the perchlorate used in the present invention include perchlorates of alkali metals or alkaline-earth metals, or ammonium perchlorates. Examples are ammonium perchlorate, sodium perchlorate, potassium perchlorate, or magnesium perchlorate, calcium perchlorate, barium perchlorate, strontium perchlorate, etc., more preferably, sodium perchlorate, potassium perchlorate and ammonium perchlorate; among which particularly preferred is potassium perchlorate. The particle size of the perchlorate used is, without limitation, preferably 1-1000 micrometers, more preferably 10-600 micrometers in view of its better combustibility.

In the gas generating agent composition according to the present invention, while independent use of said perchlorate as an oxidizer component is preferable in terms of environmental resistance ability, other inorganic oxidizers may be used along with said perchlorate so long as environmental resistance is not compromised. Preferred as an applicable inorganic oxidizer is metal nitrate, such as metal nitrate selected from alkali metal nitrate, alkaline-earth metal nitrate, iron nitrate, copper nitrate, cobalt nitrate, nickel nitrate, zinc nitrate and so on.

A water-soluble polymeric binder agent applied in the gas generating agent composition according the present invention acts as a binder for maintaining the molded shape of a gas generating agent composition which is obtained by mixing a fuel component, an oxidizer component and an additive component, which can be optionally added, such as a molding aid, a combustion regulating agent or a slug forming agent.

A water-soluble polymeric binder agent preferred in the present invention enables the gas generating agent composition to be added and kneaded with water and then subjected to extrusion molding. A preferable water-soluble polymeric binder agent provides the gas generating agent composition with better formability. Specific examples of the water-soluble polymeric binder agent include hydroxypropylmethylcellulose, hydroxyethylmethylcellulose, methylcellulose, polyacrylamide, polyvinylpyrrolidone, polyvinyl alcohol, carboxymethylcellulose and salts thereof, as well as combinations of more than one of these components. More preferable examples are hydroxypropylmethylcellulose, hydroxyethylmethylcellulose, methylcellulose, carboxymethylcellulose and cellulose derivatives, typically salts thereof; among which particularly preferred is hydroxypropylmethyl-cellulose. Alternatively, it is also preferable to use any of the above-mentioned cellulose derivatives as a main binder component, which is mixed with a small amount of polyacrylamide. In this case, use of a mixture of hydroxypropylmethylcellulose and polyacrylamide is more preferable.

By applying the water-soluble polymeric binder agent to the gas generating agent composition of the present invention, the resulting molded product may exhibit enhanced mechanical strength and retain its shape. Consequently, the improved heat resistance and anti-hygroscopicity of the gas generating agent composition may be maintained for a long period of time, while allowing the use of water as a medium in preparation of a molded product, avoiding the use of a flammable medium, such as an organic solvent. This may offer high safety in the production of a gas generating agent composition which requires careful handling.
Addition of such a water-soluble polymeric binder also enables preparation of the composition mixture which shows high formability and has suitable viscosity. This mixture may be molded into a desired shape, allowing preparation of a gas generating agent molded product of any shape.

As a water-soluble polymeric binder agent, in particular, such a mixed binder is particularly preferable that is obtained by adding a small amount of polyacrylamide to another water-soluble polymeric binder component. This is because bulk components of the gas generating agent composition are rigid due to the nature of bulk components in wet condition, which may reduce the difficulty of fabricating a molded product in extrusion molding (high load on the extruder), reduce the viscosity of the bulk components to increase fluidity and allows for easy fabrication of a molded product in extrusion molding.

The gas generating agent composition according to the present invention may be preferably prepared such that the content of pentaerythritol is 10-30% by mass, perchlorate 50-89% by mass and water-soluble polymeric binder agent 1-10% by mass; more preferably, the content of pentaerythritol is 15-28% by mass, perchlorate 60-80% by mass and water-soluble polymeric binder agent 2-8% by mass.

While the gas generating agent composition according to the present invention contains pentaerythritol, perchlorate and a water-soluble polymeric binder agent, any other molding aid may be added to the composition.
Such a molding aid adds some viscosity to the kneaded product and improves the formability of the molded product when a fuel component, oxidizer component and binder component are kneaded, possibly after water addition. Molding aids preferred in the present invention include synthetic hydrotalcite, acid clay, talc, molybdenum disulfide, bentonite, diatomite, crystalline cellulose, graphite, magnesium stearate, calcium stearate and so on. Particularly preferred are synthetic hydrotalcite, acid clay and talc. In this gas generating agent composition, such a molding aid is contained in an amount of preferably 0-10% by mass, more preferably 0.5-7% by mass. This content range is preferred for improved formability.

The gas generating agent composition according to the present invention may contain any other additives. The other additives include lubricants, combustion regulating agents and slug forming agents.
Lubricants include a surfactant, coupling agent, graphite and molybdenum disulfide. Addition of these may contribute to further improved formability.
Combustion regulating agents include metal oxides, such as iron oxide, copper oxide, manganese oxide or cobalt oxide; metal hydroxides, such as copper hydroxide, cobalt hydroxide or aluminum hydroxide; activated carbon; carbon black and so on. Addition of these allows control of combustion of the gas generating agent composition.
Slug forming agents include silicon nitride, silicon carbide, silicon dioxide, talc, clay, alumina and so on. Addition of these enables transformation of any combustion residue components of the gas generating agent composition into microparticles capable of being collected by filtration.
These additives may be added to the gas generating agent composition in any amount, preferably usually in an amount of 0-10% by mass, more preferably 0.5-5% by mass, respectively. Here, if each content exceeds 10%, the amount of gas generation by the gas generating agent composition can be reduced.

The gas generating agent composition of the present invention may be molded into a suitable shape to produce a gas generating agent molded product. Such a molded product may have any shape including, but not limited to, a pellet-like, disk-like, spherical, columnar, hollow cylindrical, crenated, tetrapod-like shape and so on, whether imperforate or perforated. The molded product preferably has a columnar shape with each end compressed such that an improved loading density in a gas generator is achieved and the gas generator becomes smaller in size. The gas generating agent composition of the present invention may tailor the shape of the molded product to adjust the mechanical strength and combustion speed of the obtained gas generating agent molded product to a sufficient and desirable level.

In addition, the gas generating agent composition may produce a molded product by an extrusion molding process. Since the extrusion molded product has a smaller specific surface area than a powder or granular molded product and thus may have a larger bulk density, it can be loaded with a larger amount of the gas generating agent composition per unit capacity. This may reduce the size of a chamber of the gas generator for loading the gas generating agent composition, resulting in a smaller size/weight of the gas generator.

For example, extrusion molding involves first mixing pentaerythritol, perchlorate and a water-soluble polymeric binder agent as well as any additive, such as a molding aid, of the gas generating agent composition using a V-shape rotating mixer or ball mill. Then, water and, if necessary, an organic solvent are poured into the obtained mixture, which in turn is kneaded to obtain a wet bulk component. The use of water as the kneading medium may ensure the safety of production of the gas generating agent composition. Subsequently, the wet bulk component may be molded into an arbitrary shape by an extrusion molding machine to obtain a molded product. After the extrusion molding, the obtained molded product may be subjected to heat treatment at temperatures between 50-120 °C for 10-30 hours. This may result in a gas generating agent molded product which shows less variations in heat resistance and humidity resistance over time. The heat treatment process may be performed in a single-stage process, preferably in a two-stage process for better heat/humidity resistance; first at 50-90 °C for 5-15 hours then at 80-120 °C for 5-15 hours. The production method using the extrusion molding requires removal of water and/or organic solvent from the molded product of wet bulk components which has a moisture content of 10-20% by mass. It is preferable in producing a gas generating agent molded product that the above-described solvent removal and drying step is performed by heat treatment at low temperature over a long period of time. If the treatment temperature is high at the initial stage of heat treatment, air bubbles would occur in the molded product because moisture evaporates too quickly. This would result in insufficient strength of the obtained gas generating agent molded product, causing abnormal combustion during combustion. The gas generating agent composition contains a hydrophilic water-soluble polymeric binder agent and undergoes a molded product preparation process, during which water is added thereto. Nevertheless, the obtained gas generating agent composition does not show hygroscopicity. Through this heat treatment, the gas generating agent composition may be prepared to have such physical properties showing desired humidity-resistance characteristics. That is, the heat treatment process is of particular importance in preparation of a gas generating agent molded product in order to obtain a gas generating agent composition molded product having sufficient mechanical strength and heat/humidity resistance.

Meanwhile, the above-described gas generating agent molded product is preferably applied to gas generators for driving vehicle safety devices used to actuate vehicle safety devices, more preferably to gas generators installed on the exterior of the vehicle.
As used herein, the term "exterior of the vehicle" refers to those parts such as located near the front and rear bumpers of the vehicle, under the hood, inside the engine compartment or on top of the vehicle; those sites exposed to the outside environment, other than the occupant space of the vehicle. These vehicle exterior sites are in a particularly severe installation environment which is directly affected by the outdoor environment, but also exposed to engine heat, high moisture and even vibration. The gas generating agent composition of the present invention shows better heat/humidity resistance and has a sufficient strength as a gas generating agent molded product. A gas generator loaded with this gas generating agent composition can be particularly advantageously used as a gas generator to be installed in severe environments.

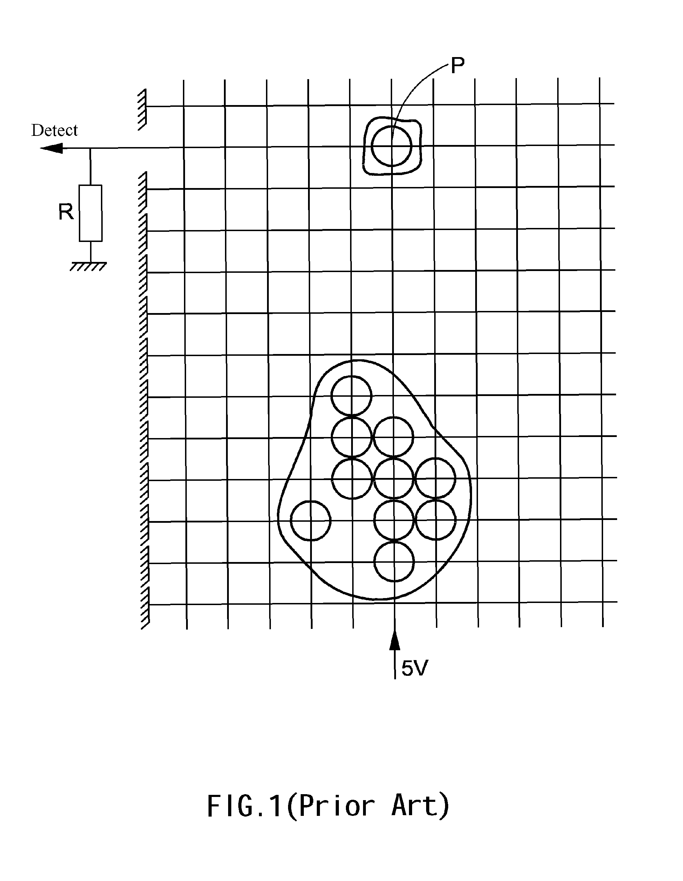

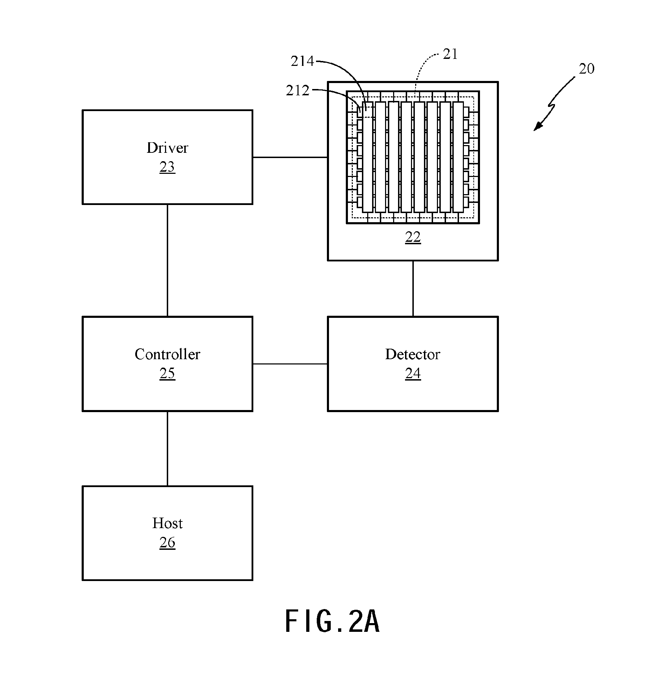

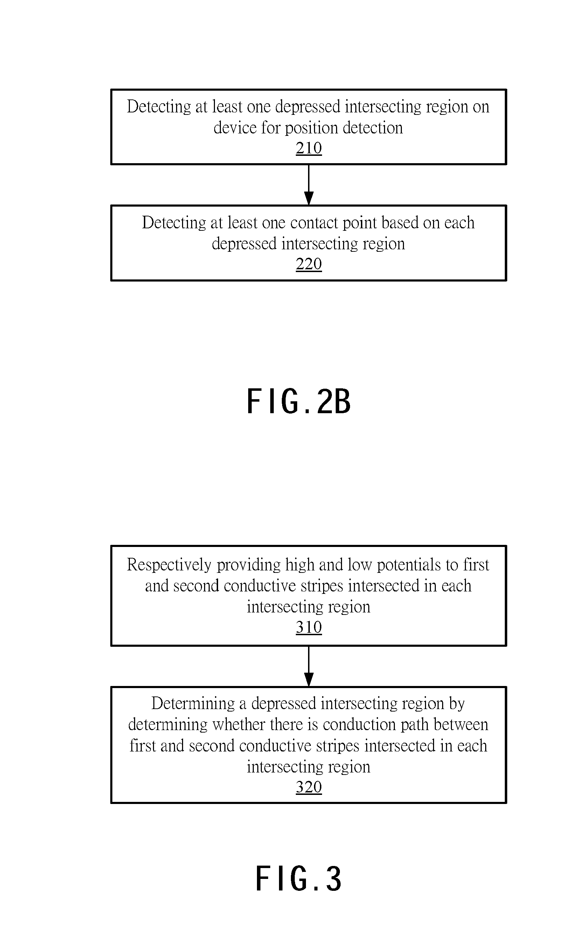

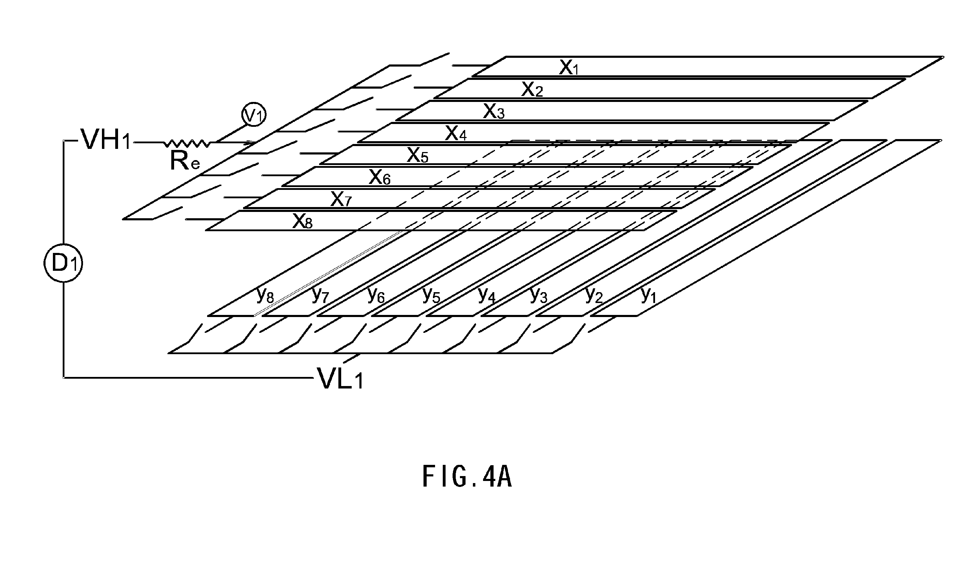

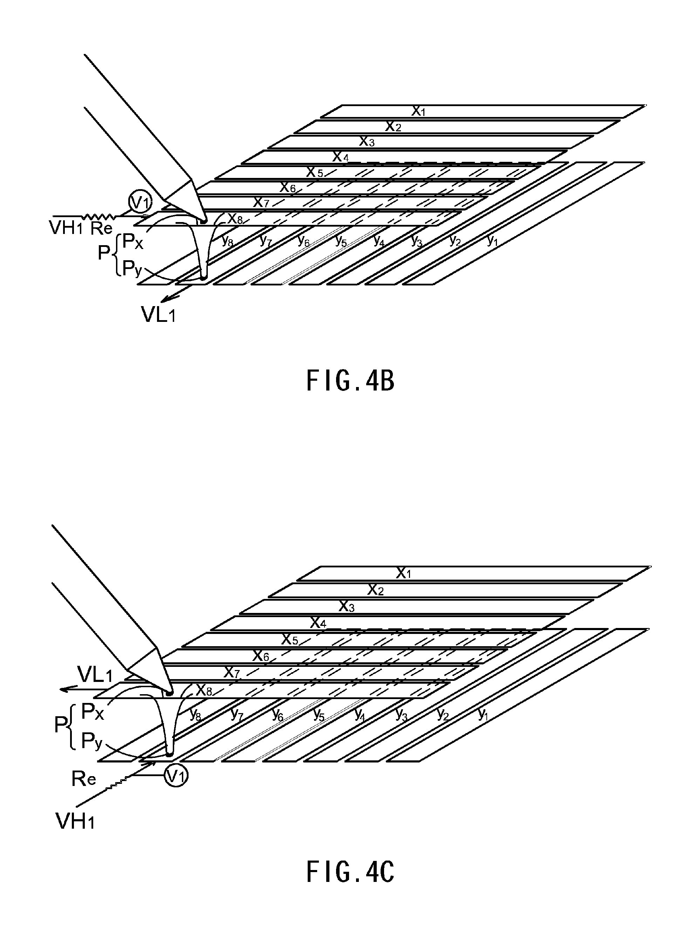

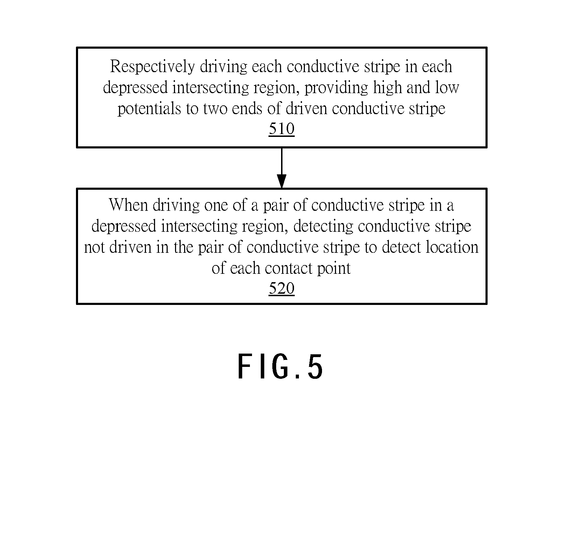

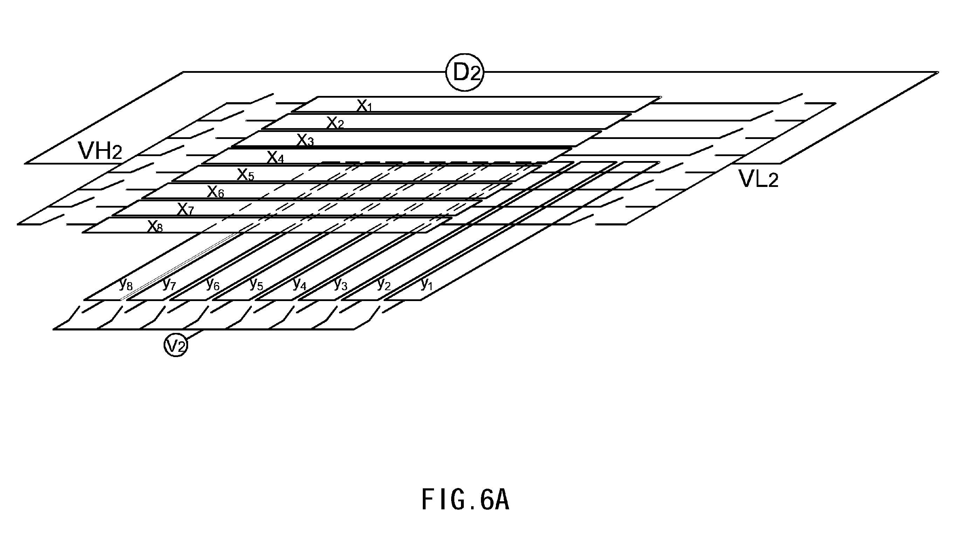

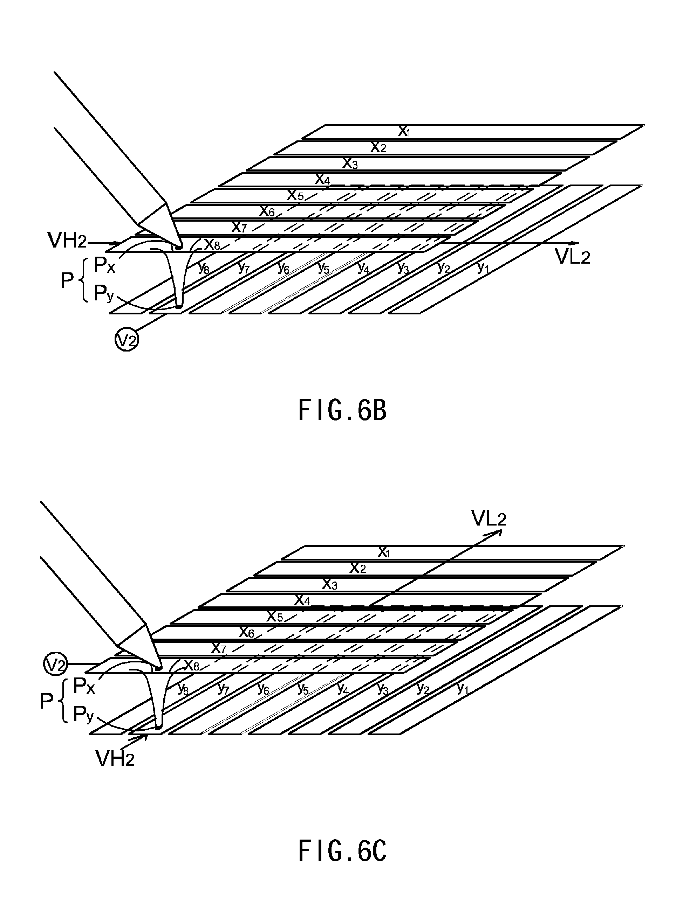

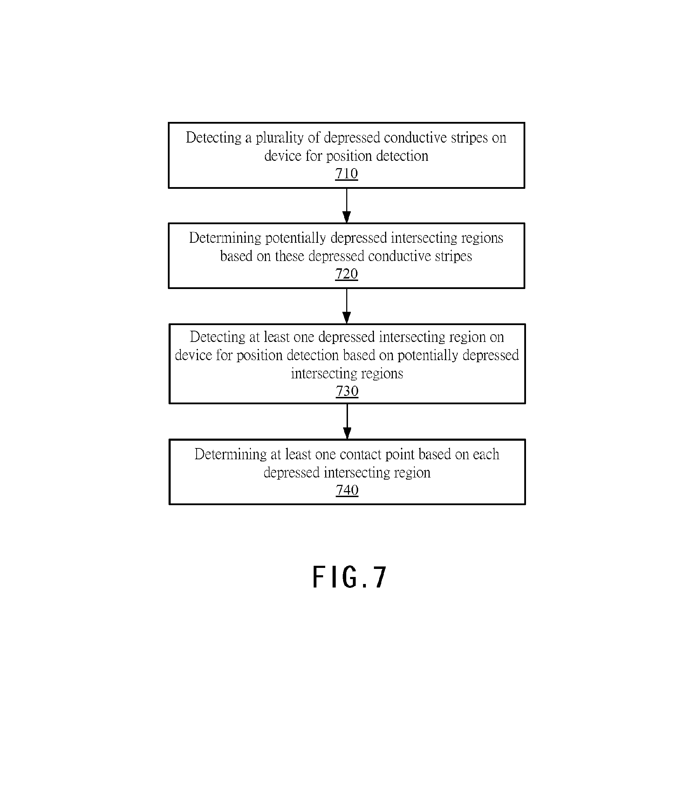

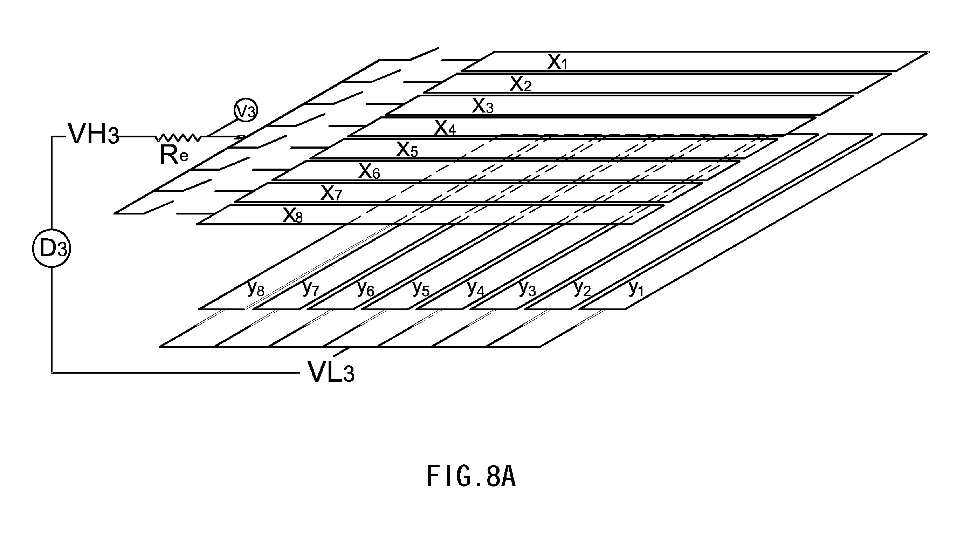

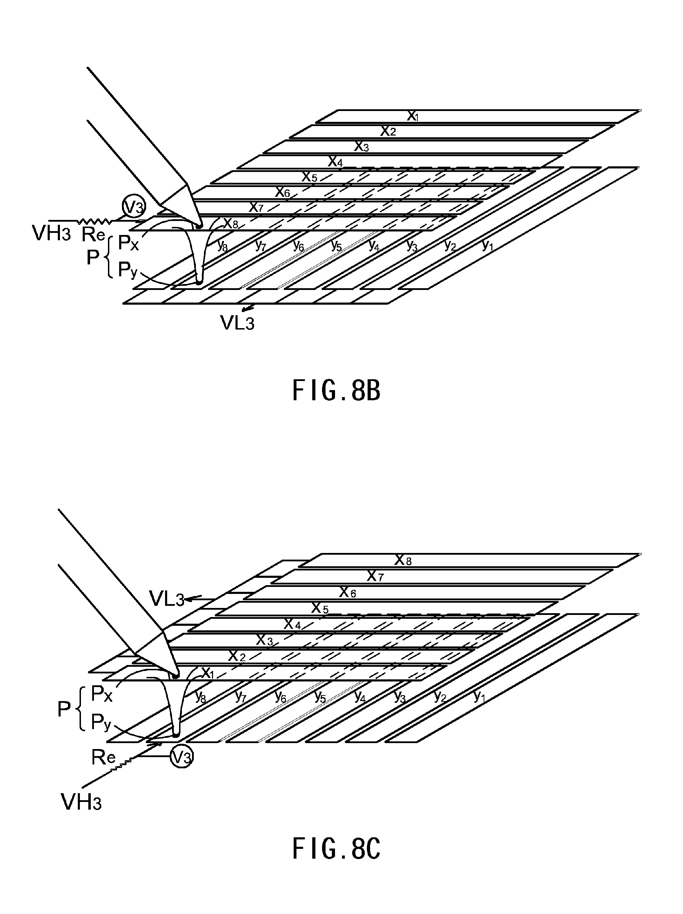

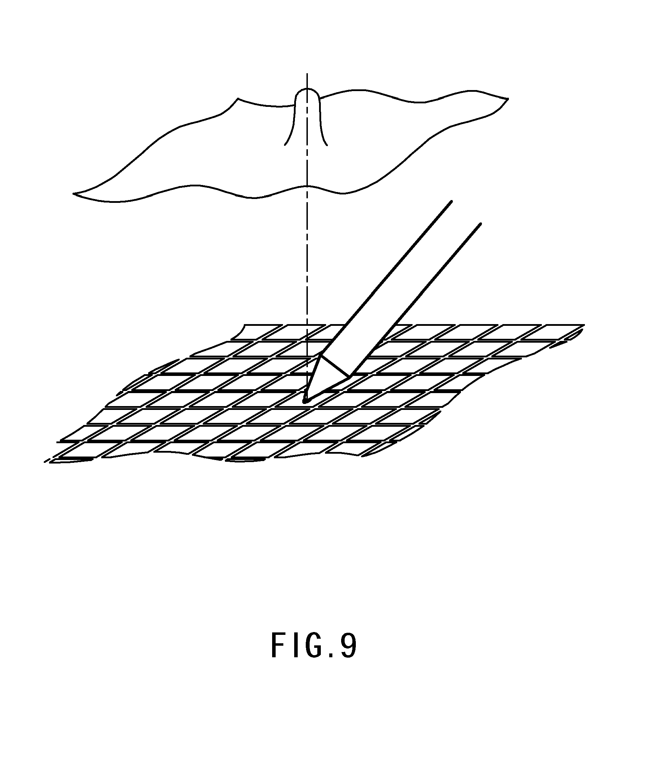

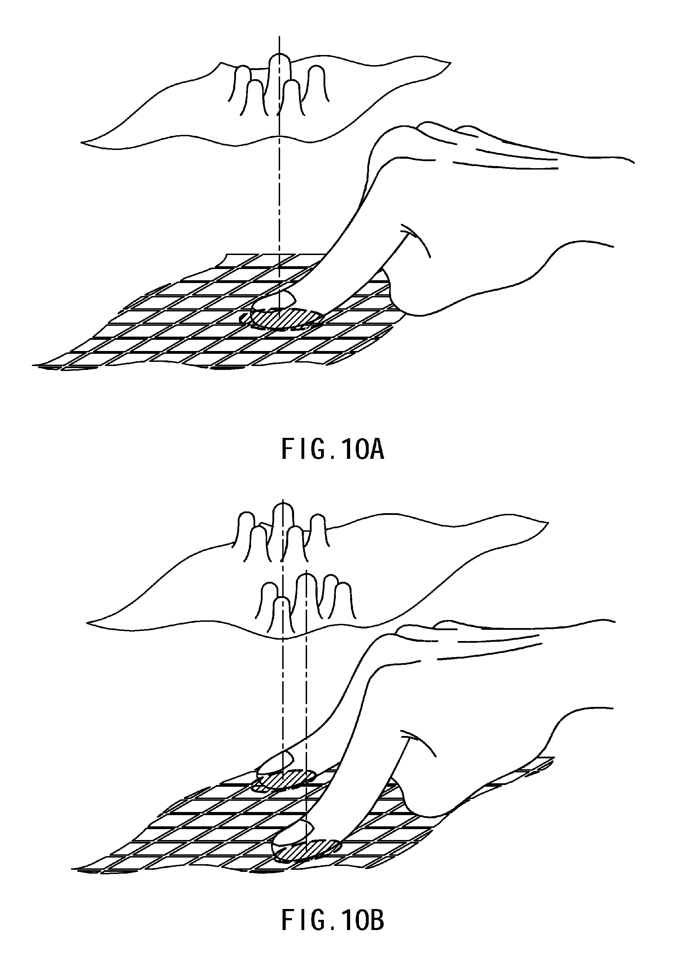

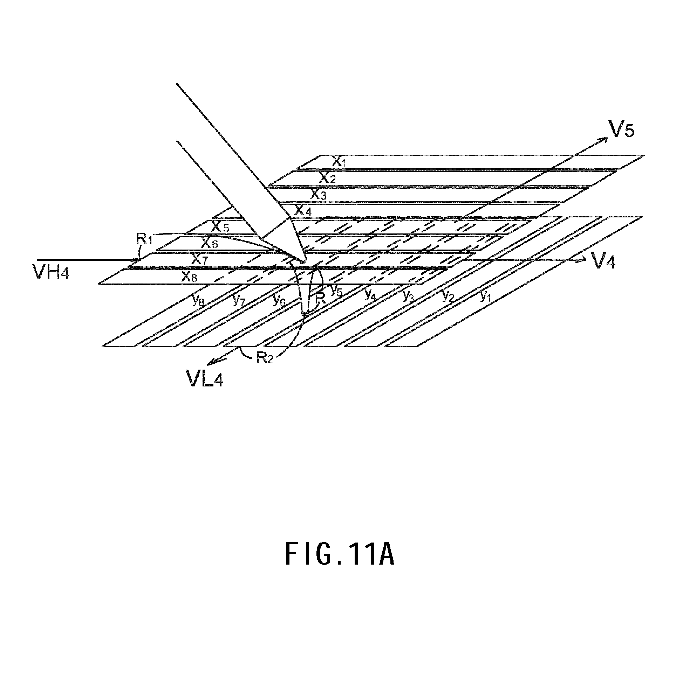

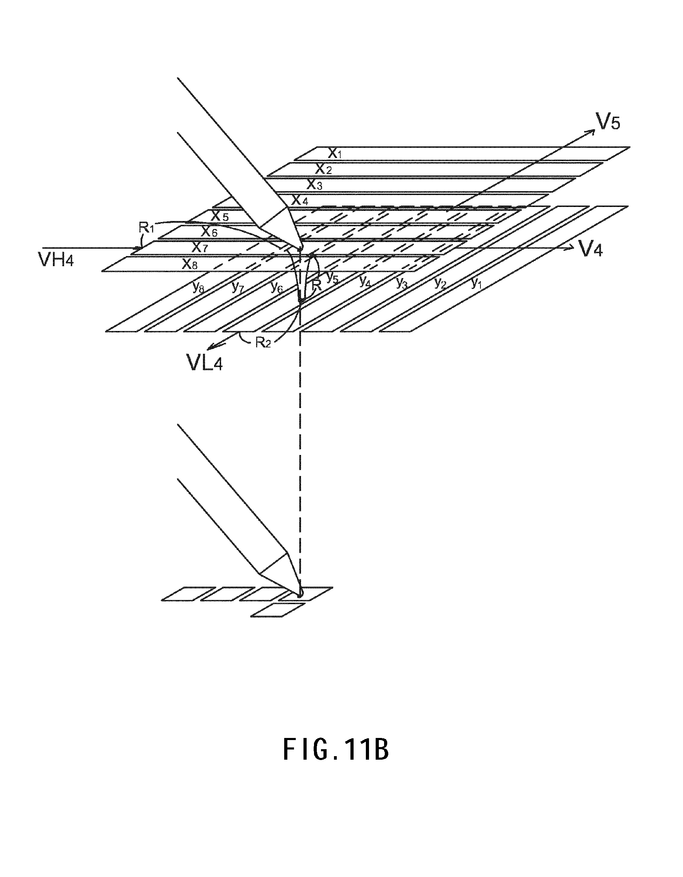

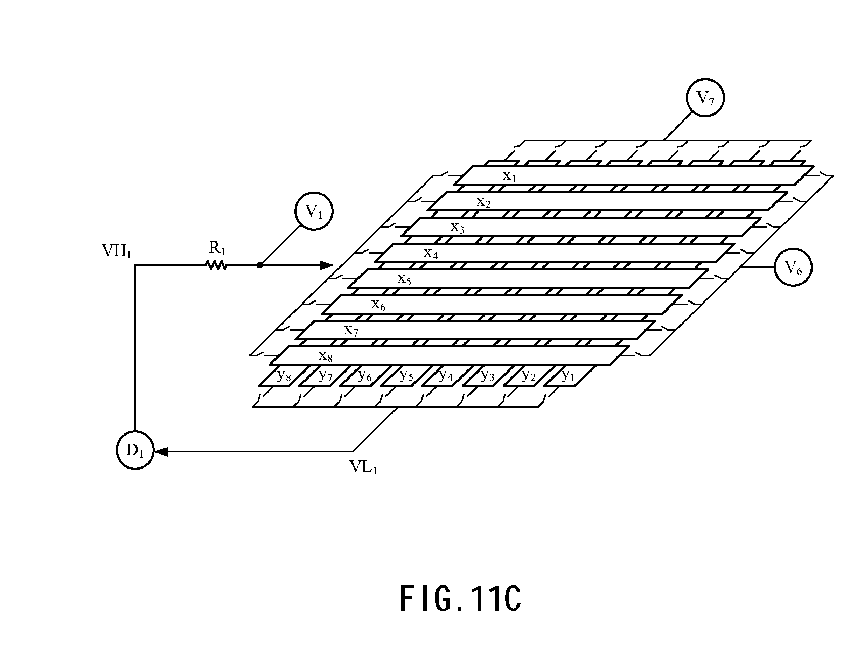

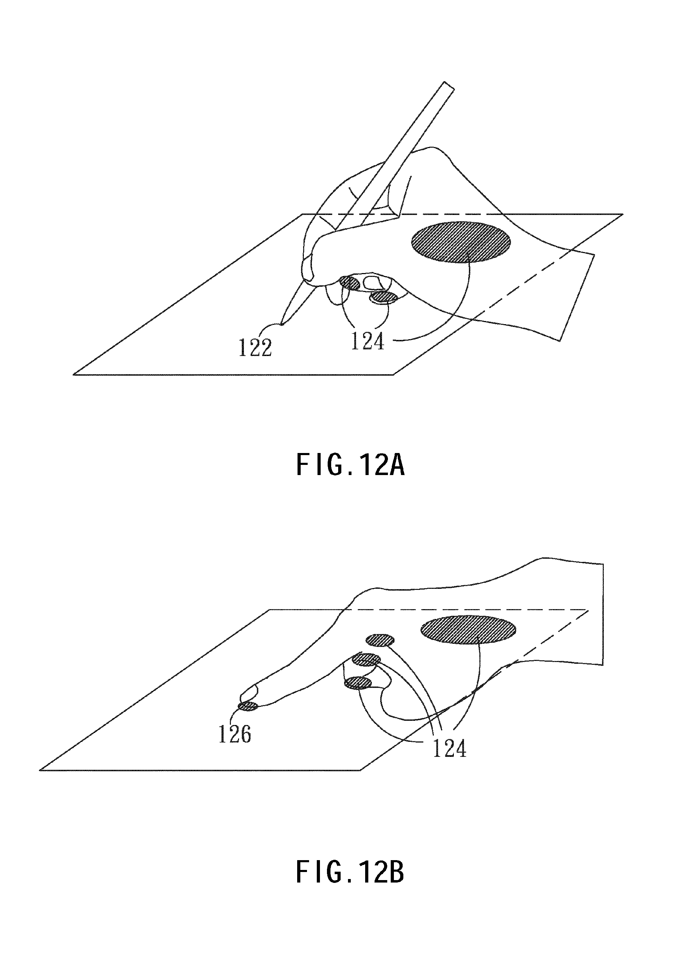

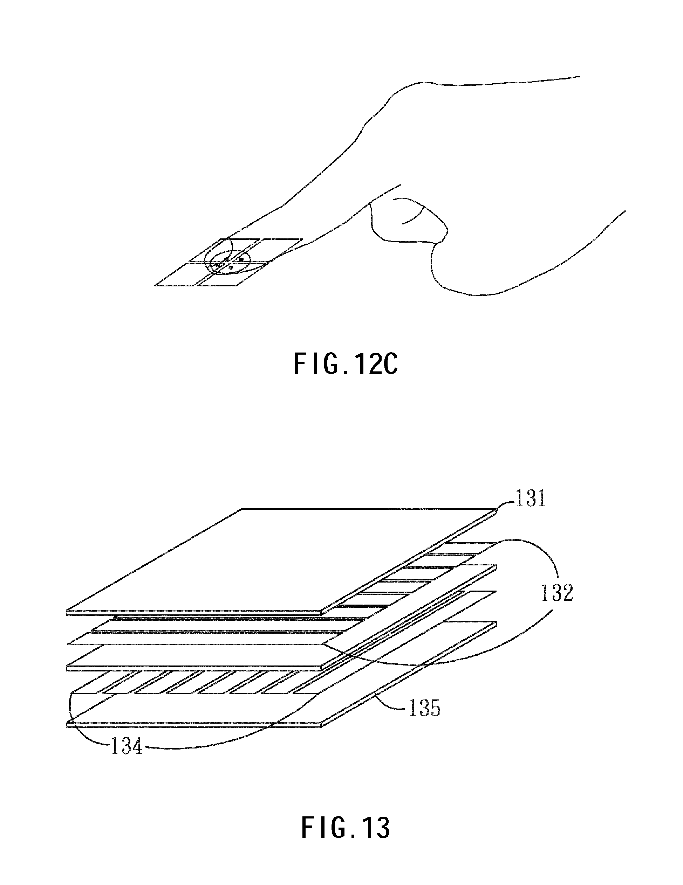

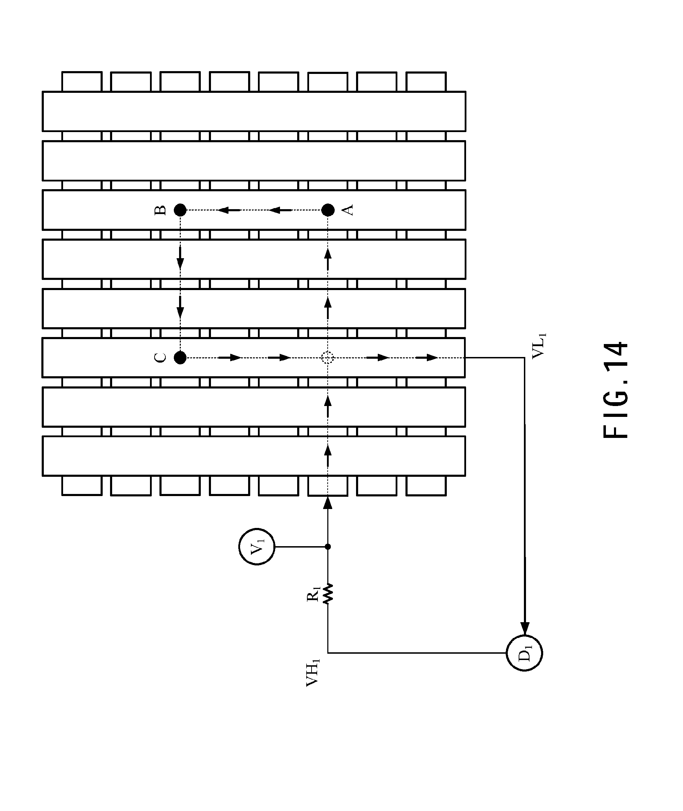

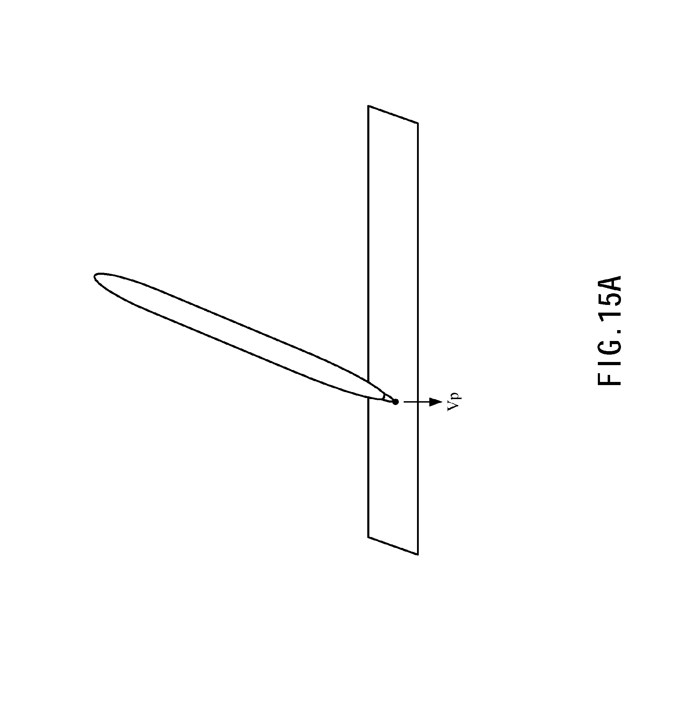

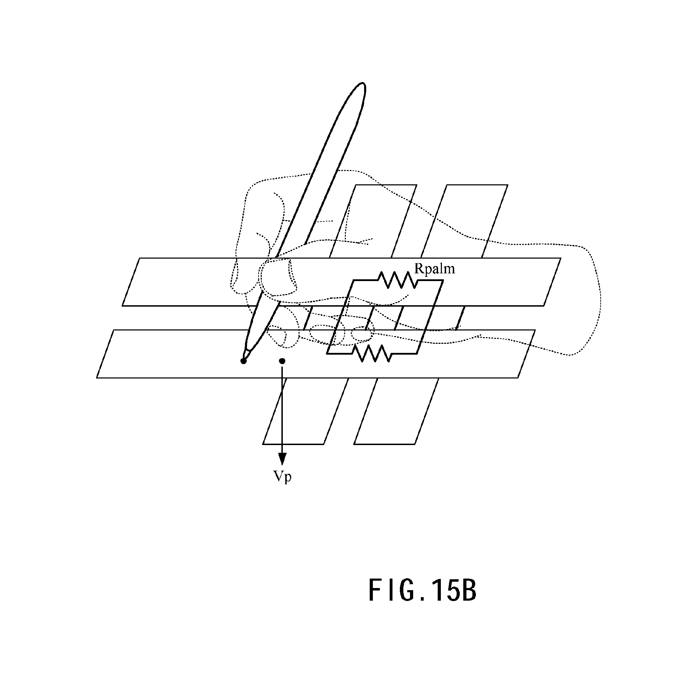

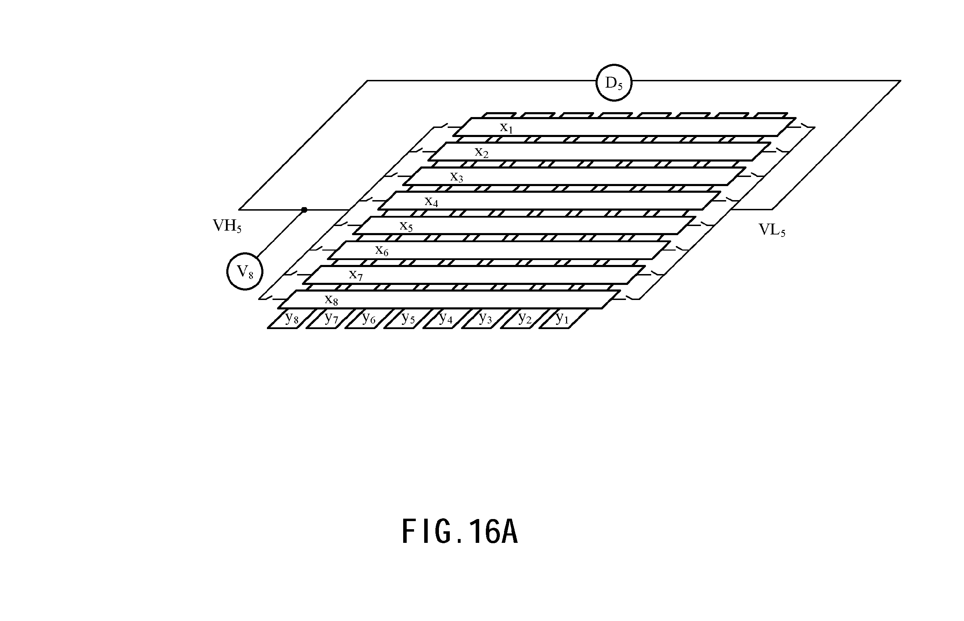

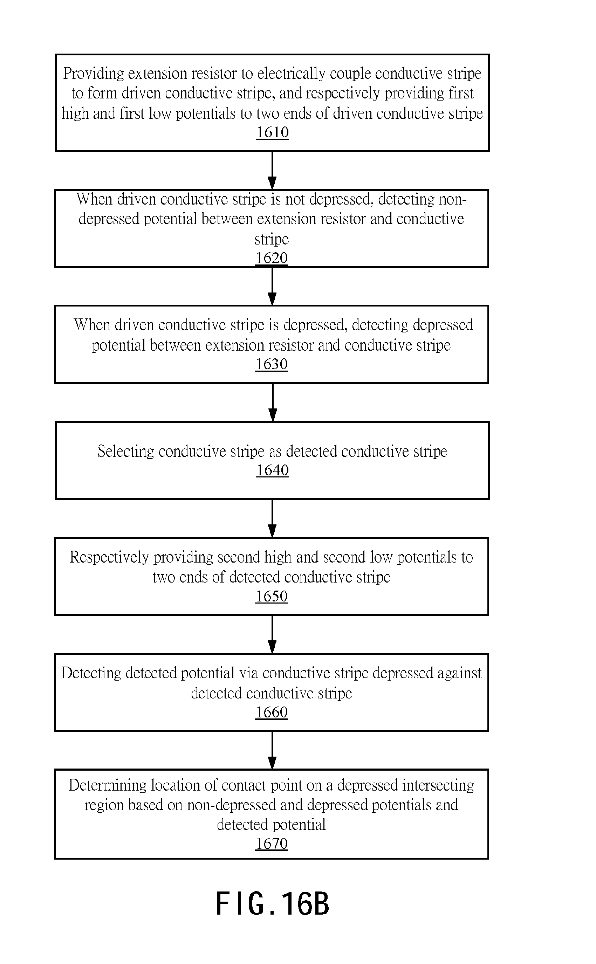

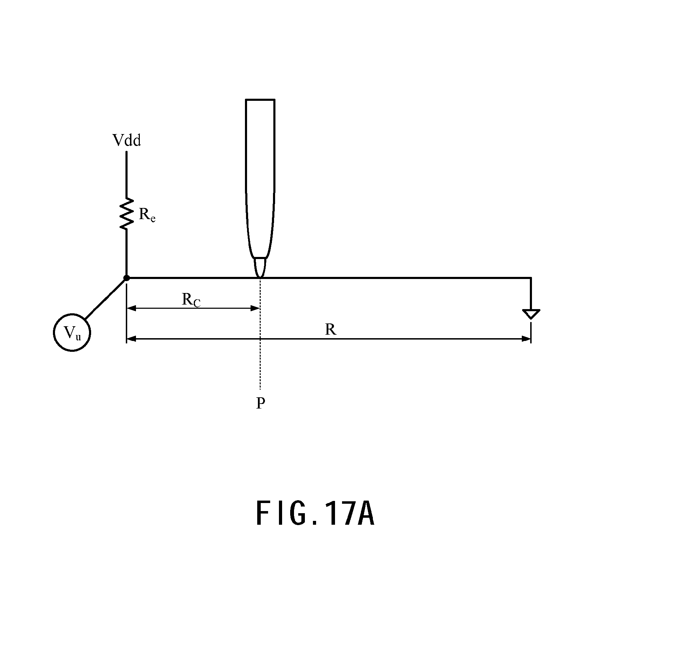

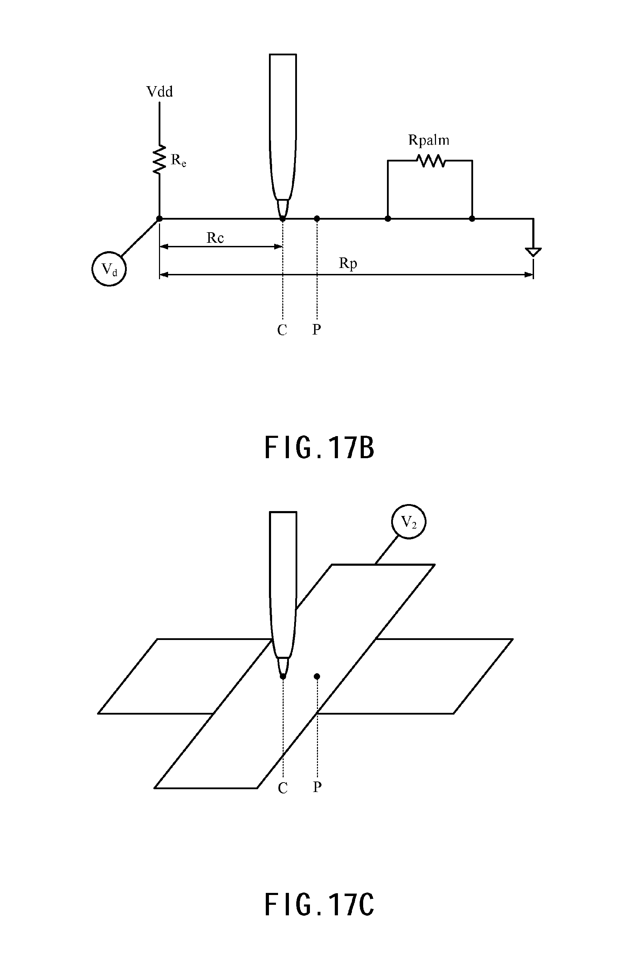

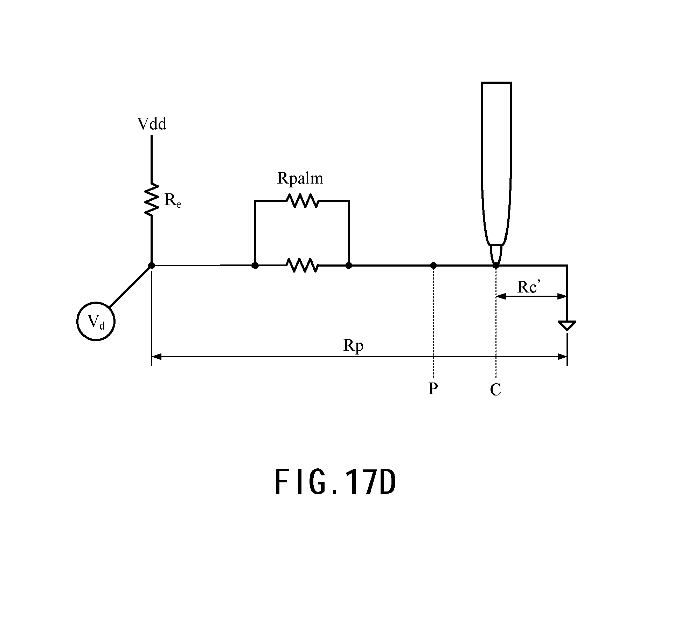

Assuming that such a gas generator uses the gas generating agent composition of the present invention as described above, it is not limited to a particular shape. Examples of its shape may include the shape of the gas generator for airbag deployment as illustrated in FIGS. 1 and 2, or the shape of the small gas generator as depicted in FIG. 3. This small gas generator is integrated into and applied to a hood-lifting device or a roll bar deployment device.
Among the above, particularly preferred may be a gas generator which is installed on the exterior of the vehicle in the embodiments of the present invention. That is, the above-mentioned gas generator for airbag deployment is suitable for being integrated as: an airbag device which is installed on the lower part of the front hood near the windshield of the automobile and which is deployed for protecting a person hit by and thrown up onto an automobile; or a hood-lifting device which is installed under the hood and which is designed to lift the hood as an airbag is deployed under the hood at the time of collision. In addition, the above-mentioned small gas generator is suitable for a small gas generator which is integrated into a hood-lifting device installed on the lower part of the hood as a starter to drive an arm mechanism for lifting or popping up the hood at the time of collision. Alternatively, it is suitable for a gas generator which is installed around the B-pillar in the central part of the vehicle as a starter of a drive mechanism for putting up the roll bar to prevent occupants from being crushed at the time of a vehicle rollover accident.

The gas generator 1 illustrated in FIG. 1 has its outer shell formed by a housing 2, which has a plurality of gas discharge ports 6 and in which an ignition device 3 and a cooling filter member 5 are provided. Loaded in the interior space of the generator are gas generating agent molded products 4, each obtained by molding the gas generating agent composition of the present invention. Installed in proximity to said ignition device 3 is an inner cylindrical body 7. In a normal configuration of the gas generator, the inner cylindrical body 7 is loaded with an inflammation agent 8 for transmitting the flame produced by the ignition device 3 to the gas generating agent molded products 4. The gas generator 1 operates as follows: in response to an electrical signal sent from a collision detection sensor (not illustrated), the ignition device 3 is activated to ignite the ignition agent (not illustrated) in the ignition device, which in turn ruptures the outer shell of the ignition device to produce flame. Then, the produced flame ignites the inflammation agent 8, which in turn is discharged from flash holes arranged in the inner cylindrical body to cause ignition of the gas generating agent molded products 4. The gas generating agent molded products 4 generate gas by combustion. The generated gas is discharged from gas discharge ports 6 via the cooling filter member 5. The pressure caused by discharging the generated gas activates a predetermined vehicle safety device.

The gas generator of this structure is usually used as a gas generator for deployment of airbags for vehicle front-seat installation. However, as the gas generating agent composition according to the present invention offers better environmental resistance, it is installed on the exterior of the vehicle, particularly around the hood or bumper, and preferably used as a gas generator for deployment of airbags on the exterior of the vehicle, for deployment of airbags used for hood lifting, or for deployment of motorcycle-mounted airbags.

An elongated cylindrical gas generator 11, as illustrated in FIG. 2, has its outer shell formed by an elongated cylindrical housing 12, which is a metallic container having a plurality of gas discharge ports 16, and in which an ignition device 13 and a cooling filter member 15 are provided. Loaded in the interior space of the generator are gas generating agent molded products 14, each obtained by molding the gas generating agent composition of the present invention in the inner spatial area. Installed in proximity to said ignition device 13 is an inner cylindrical body 17. In a normal configuration of the elongated cylindrical gas generator, the inner cylindrical body 17 is loaded with an inflammation agent 18 for transmitting the ignition flame produced by the ignition device 13 to the gas generating agent molded products 14. The gas generator 11 operates as follows. In response to an electrical signal sent from a collision detection sensor (not illustrated), the ignition device 13 is activated to ignite the ignition agent (not illustrated) in the ignition device, which in turn ruptures the outer shell of the ignition device to produce flame. The produced flame ignites the inflammation agent 18, which produces additional flame to rupture the inner cylindrical body 17 and cause ignition of the gas generating agent molded products 14. The gas generating agent molded products 14 generate gas by combustion. The generated gas is discharged from gas discharge ports 16 via the cooling filter member 15. The pressure caused by discharging the generated gas activates a predetermined vehicle safety device.

The gas generator of this structure is usually used as a gas generator for deployment of airbags for vehicle side crash, or for protection of front-seat lower legs, or for lifting of the seating surface of the seat. However, as the gas generating agent composition according to the present invention offers better environmental resistance, it is installed on the exterior of the vehicle, particularly around the hood or bumper, and preferably used as a gas generator for deployment of airbags on the exterior of the vehicle, for deployment of airbags used for hood lifting, for roll-bar deployment devices installed on the exterior of the vehicle, or for deployment of motorcycle-mounted airbags.

A small gas generator 21, illustrated FIG. 3, has its outer shell formed by an metal cup 23 and a metal holder 24, in which outer shell an ignition device 25 is provided. Loaded in the interior space of the generator are gas generating agent molded products 22, each obtained by molding the gas generating agent composition of the present invention. The gas generator 21 operates as follows: in response to an electrical signal sent from a collision detection sensor (not illustrated), the ignition device 25 is activated to ignite the ignition agent (not illustrated) in the ignition device, which in turn ruptures the outer shell of the ignition device to produce flame. Then, the produced flame ignites the gas generating agent molded products 22. The gas generating agent molded products 22 generate gas by combustion, which in turn ruptures the metal cup 23 to discharge the generated gas. The pressure caused by discharging the generated gas activates a predetermined vehicle safety device.

The small gas generator of this structure is usually used as a small gas generator for seatbelt pretensioners. However, as the gas generating agent composition according to the present invention offers better environmental resistance, it is preferably used as a gas generator for hood-lifting devices installed under the hood or engine compartment, or a gas generator for roll-bar development devices installed on the exterior of the vehicle.

Such gas generators are applicable as gas generators for activating vehicle safety devices installed on the exterior of the vehicle, in particular, around the engine compartment, hood, bumper or the like. Particularly preferred applications include a gas generator for hood-lifting devices installed under the automobile hood. This is a device for lifting the vehicle front hood to a predetermined height when a pedestrian collides with the vehicle. This type of gas generator has a function for mitigating the impact experienced when a pedestrian strikes the hood, while avoiding possible collision of the pedestrian with mechanical parts, such as the engine stored under the hood. Specific examples of this type are installed under the hood, such as: a mechanism for holding and lifting up the hood by means of rods that are raised by gas pressure of a gas generator, as described in Japanese Patent Laid-Open No. 2002-370611; a hood lifting device for unlatching a latched hook by means of the gas pressure caused by a gas generator to actuate a hood lifting mechanism, as described in Japanese Patent Laid-Open No. 2005-200012; a device for lifting the hood by raising inflatable elements using a gas generator, as described in Japanese Patent Laid-Open No. 2007-39027; or the like. Such gas generators have suitable performance for integration into and application to the above-mentioned devices as their activation devices.

The present invention will now be described in more detail below with reference to the examples and comparative examples. However, the present invention is not limited to the examples given below.

### EXAMPLE

### Example 1

Acid clay: 3.5 parts by mass, EKINEN: 3 parts by mass and water: 12 parts by mass were added to pentaerythritol: 22 parts by mass, potassium perchlorate: 74 parts by mass, hydroxypropylmethylcellulose: 3.2 parts by mass and polyacrylamide: 0.8 parts by mass. The obtained product was kneaded in a kneader, then molded into ϕ1.5 mm using a screw extruder and cut to a length of 2.5 mm by using a cutter. This gas generating agent composition was subjected to heat treatment at 55 °C for 8 hours in a heat treatment machine, followed by further heat treatment at 110 °C for 8 hours. As a result, columnar gas generating agent molded products were obtained.

### Example 2

Acid clay: 3.5 parts by mass, EKINEN: 3 parts by mass and water: 12 parts by mass were added to pentaerythritol: 26.4 parts by mass, potassium perchlorate: 69.6 parts by mass, hydroxypropylmethylcellulose: 3.2 parts by mass and polyacrylamide: 0.8 parts by mass. The obtained product was kneaded in a kneader, then molded into ϕ1.5 mm using a screw extruder and cut to a length of 2.5 mm by using a cutter. This gas generating agent composition was subjected to heat treatment at 55 °C for 8 hours in a heat treatment machine, followed by further heat treatment at 110 °C for 8 hours. As a result, columnar gas generating agent molded products were obtained.

### Example 3

Acid clay: 3.5 parts by mass, EKINEN: 3 parts by mass and water: 12 parts by mass were added to pentaerythritol: 19.8 parts by mass, potassium perchlorate: 76.2 parts by mass, hydroxypropylmethylcellulose: 3.2 parts by mass and polyacrylamide: 0.8 parts by mass. The obtained product was kneaded in a kneader, then molded into ϕ1.5 mm using a screw extruder and cut to a length of 2.5 mm by using a cutter. This gas generating agent composition was subjected to heat treatment at 55 °C for 8 hours in a heat treatment machine, followed by further heat treatment at 110 °C for 8 hours. As a result, columnar gas generating agent molded products were obtained.

### Test Example 1: 10 mL bomb test

A 10 mL bomb test was used as a method for evaluating the output characteristics of the gas generator. A gas generator under test is fixed in a tank, which is made of SUS (stainless steel) and has an inner capacity of 10 mL at room temperature. Then, the tank was sealed up and connected to the igniter of the gas generator via a cable. This cable was further connected to an outside ignition current generating device. Then, the ignition current generating device was turned on, which triggered the initiation of data collection using pressure sensors installed on the inner walls of the tank. Assume that the time at which the ignition current generating device was turned on is time 0, a data logger was used to measure the pressure rise fluctuations in the tank for 150 milliseconds from time 0. Besides, the sampling rate was 10 kHz. Then, the data sampled by the data logger was subjected to a digital signal processing. Finally, a curve was obtained as a tank pressure-time (MPa/millisecond) curve to evaluate the performance of the gas generating agent composition. As used herein, the term ignition time (TTFG: Time To First Gas) means the time it takes for the pressure to begin to rise in the tank after the ignition current generating device was turned on. In addition, the term in-tank maximum pressure (Pmax) refers to a maximum pressure in the tank made of SUS in this tank combustion test. Further, additional important factors affecting the output characteristics of the gas generator are time to peak pressure (Tpeak) and pressure rise rate (dP/dt). The pressure rise rate is given by pressure fluctuations that occur over time until the in-tank maximum pressure (Pmax) is reached.

In this case, 450 mg of gas generating agent molded products of Examples 1-3 were used to produce three small gas generators as illustrated in FIG. 3, respectively. For this purpose, a 10 mL bomb test was performed to determine the means of maximum pressure Pmax, pressure rise rate dP/dt and ignition time TTFG. The test results on the evaluation (10 mL bomb test) of the combustion characteristics of the gas generating agent composition of Examples 1-3 are shown in Table 1.

**[Table 1]**

| | Pmax (MPa) mean | dP/dt mean | TTFG (millisec) mean |
|---|---|---|---|
| Example 1 | 15.2 | 1.204 | 0.93 |
| Example 2 | 15.4 | 1.286 | 0.88 |
| Example 3 | 14.7 | 1.094 | 0.96 |

Examples 1-3 all showed a time-to-ignition response, TTFG, of 1.0 milliseconds or less by the ignition device of the small gas generator. This value represented a satisfactory physical property in terms of the ignition performance provided by the igniter of the gas generator. Further, all of these examples exhibited adequate combustion characteristics in maximum pressure Pmax and pressure rise rate dP/dt. Accordingly, these examples showed sufficient performance for small gas generators for driving vehicle safety devices that require, as essential physical properties, fast ignition response as well as rapid and sufficient pressure characteristics.

### Test Example 2: heat resistance test

About 1 g of gas generating agent molded products of Example 1 was precisely weighed into weighing bottles. Then, the bottles were placed into furnaces at atmosphere temperatures of 120 °C, 130 °C and 140 °C for 400 hours, respectively. Thereafter, the samples under test were removed from the furnaces to assess the weight changes over time in a heated atmosphere. The heat resistance test results on the gas generating agent molded products of Test Example 2 are shown in Table 2, based on the weight loss rate of the samples under test at respective treatment temperatures after a lapse of 400 hours.

**[Table 2]**

| | | | |
|---|---|---|---|
| Treatment Temperature | 120 °C | 130 °C | 140 °C |
| Weight Loss Rate | 0.33% | 0.53% | 0.53% |

It was found that each test sample under test of the gas generating agent molded product according to Example 1 showed only a very small weight loss under any of the temperature conditions, where little decomposition occurred. From this result, it was ascertained that the gas generating agent molded product according to Example 1 has a weight loss rate of 0.5% by mass or less during a severe heating test at 120 °C for 400 hours, and that the gas generating agent molded product has a heat resistance which satisfies the heat resistance test requirements, weight loss rate of 1.0% by mass or less in a severe heating test at 140 °C for 400 hours. A gas generator installed on the exterior of the vehicle is required to have physical properties without deterioration of the original performance in a heat resistance test under a severe condition of at least 120 °C for 400 hours. It was revealed that the gas generating agent composition according to the present invention meets the required performance on heat resistance and does not show degradation in quality, such as decomposition, even under more severe temperature conditions.

### Test Example 3: hygroscopicity test

About 1 g of gas generating agent molded products of Example 1 was precisely weighed into weighing bottles. Then, the bottles were left to stand in an atmosphere at normal temperature and conditioned to 93% relative humidity. The weight of each sample was measured over time and the moisture absorption rate was calculated from the weight change rate. The weight change rate obtained from hygroscopicity test results in Test Example 3 after the expiration of the times shown is presented in Table 3.

**[Table 3]**

| | | | |
|---|---|---|---|
| Treatment Time | 24h | 30h | 50h |
| Weight Change Rate | 0.90% | 0.90% | 0.95% |

The gas generating agent molded products of Example 1 showed insignificant increase in weight over time at normal temperature and 93% relative humidity, while exhibiting very little hygroscopicity. Moisture absorption in pyrotechnic products leads to decreased ignition performance and poor combustion characteristics, as well as lower chemical quality due to, e.g., hydrolytic cleavage of components of the gas generating agent composition. Thus, this is a problem to be avoided. The gas generating agent composition according to the present invention has better anti-hygroscopicity and provides such a gas generating agent molded product that shows a weight change of 1.0% or less under a humidification test setting of normal temperature and 93% relative humidity. Therefore, the gas generating agent composition according to the present invention is a gas generating agent composition which may be applied to the gas generators installed in severe environments under high humidity conditions.

Then, in Test Examples 4-6, an environmental resistance test was conducted based on a 10 mL bomb test on the small gas generator which is loaded with the gas generating agent molded products prepared in Example 1.

### Test Example 4: (initial value) 10 mL bomb test

In this case, 450mg of gas generating agent molded products of Example 1 was used to produce ten small gas generators as illustrated in FIG. 3. A 10 mL bomb test was performed as described in Test Example 1 on this small gas generator to determine the means of TTFG, Tpeak and Pmax, as well as the standard deviations (σ) thereof. The test results are summarized in Table 4.

### Test Example 5: (high temperature environment test) 10 mL bomb test

In this case, 450 mg of gas generating agent molded products of Example 1 was used to produce ten small gas generators as illustrated in FIG. 3. These generators were left to stand in a high temperature tank of 105 °C for 900 hours. Afterwards, a 10 mL bomb test was conducted as described in Test Example 1 to determine the means of TTFG, Tpeak and Pmax, as well as the standard deviations (σ) thereof. The test results are summarized in Table 4.

### Test Example 6: (high temperature and high humidity environment test) 10 mL bomb test

In this case, 450 mg of gas generating agent molded products of Example 1 was used to produce ten small gas generators as illustrated in FIG. 3. These generators were left to stand in a high temperature and high humidity tank of 80 °C at 95% relative humidity for 144 hours. Afterwards, a 10 mL bomb test was conducted as described in Test Example 1 to determine the means of TTFG, Tpeak and Pmax, as well as the standard deviations (σ) thereof. The test results are summarized in Table 4.

**[Table 4]**

| | TTFG (millisec) | | Tpeak (millisec) | | Pmax (MPa) | |
|---|---|---|---|---|---|---|
| | mean | σ | mean | σ | mean | σ |
| Test Example 4 | 1.18 | 0.096 | 16.6 | 1.10 | 15.4 | 0.257 |
| Test Example 5 | 0.94 | 0.084 | 15.5 | 0.74 | 15.0 | 0.222 |
| Test Example 6 | 1.09 | 0.080 | 16.2 | 0.75 | 15.0 | 0.258 |

Comparing the results of Test Example 4 (initial value) and Test Example 5 (105 °C /900 hours), there is little difference in the means of TTFG, Tpeak and Pmax. In addition, there is no significant difference in the standard deviation (σ) between these test examples. From this, it can be seen that the gas generating agent molded products of Example 1 still retain their combustion characteristics after being exposed to high temperature for a long period of time. Therefore, the gas generators produced by using the inventive gas generating agent composition may also maintain their performance.
Comparing the results of Test Example 4 (initial value) and Test Example 6 (80 °C, 95% relative humidity, 144 hours), there is little difference in the means of TTFG, Tpeak and Pmax. In addition, there is no significant difference in the standard deviation (σ) between these test examples. From this, it can be seen that the gas generating agent composition according to the present invention still retains its combustion characteristics after being exposed to high temperature and high humidity environment for a long period of time. Therefore, the gas generators using the inventive gas generating agent composition may also maintain their performance.
In addition, the performance of ignition time (TTFG), in-tank maximum pressure (Pmax) and time to peak pressure (Tpeak) is applicable for gas generators for activating vehicle safety devices.

### INDUSTRIAL APPLICABILITY

The gas generating agent composition according to the present invention offers better heat resistance and lower hygroscopicity and exhibits less variation in performance due to heat and moisture. Therefore, the gas generating agent composition of the present invention shows less performance degradation than the conventional gas generating agent composition, for applications in severe environments on the exterior of the vehicle, such as in devices on the automobile hood. The present invention may improve the reliability of vehicle safety devices.

### REFERENCE NUMERALS

- 1, 11, 21: Gas Generator
- 2, 12: Housing
- 3, 13, 25: Ignition Device
- 4, 14, 22: Gas Generating Agent Molded Product
- 5, 15: Cooling Filter Member
- 6, 16: Gas Discharge Port
- 7, 17: Inner Cylindrical Body
- 8, 18: Inflammation Agent
- 23: Cup
- 24: Holder

## Claims

1. A gas generating agent composition containing: pentaerythritol; perchlorate; and a water-soluble polymeric binder agent.

2. The gas generating agent composition according to claim 1, wherein the water-soluble polymeric binder agent is selected from the group consisting of hydroxypropylmethylcellulose, hydroxyethylmethylcellulose, methylcellulose, polyacrylamide, polyvinylpyrrolidone, polyvinyl alcohol, carboxymethylcellulose and salts thereof, as well as combinations of more than one of these components.

3. The gas generating agent composition according to claim 1 or 2, wherein a content of the pentaerythritol is 10-30% by mass, a content of the perchlorate is 50-89% by mass, and a content of the water-soluble polymeric binder agent is 1-10% by mass.

4. The gas generating agent composition according to any one of claims 1-3, wherein the gas generating agent further comprises a molding aid.

5. A gas generating agent molded product obtained by molding the gas generating agent composition according to any one of claims 1-4.

6. A gas generating agent molded product obtained by allowing the gas generating agent composition according to any one of claims 1-4 to be added and kneaded with water and then subjected to extrusion molding, followed by heat treatment.

7. The gas generating agent molded product according to claim 6, wherein the heat treatment is heat treatment of 50-120 °C for 10-30 hours.

8. A gas generator installed on the exterior of the vehicle using the gas generating agent molded product according to any one of claims 5-7.

9. The gas generator installed on the exterior of the vehicle according to claim 8, wherein the gas generator is for use in a device installed under an automobile hood and operable to lift the hood.

10. A gas generator for a hood-lifting device installed on the exterior of the vehicle, wherein the gas generator is obtained by using the gas generating agent molded product according to any one of claims 5-7.

11. Use of the gas generating agent molded product according to any one of claims 5-7 as a gas generator installed on the exterior of the vehicle.

12. Use of the gas generating agent molded product according to any one of claims 5-7 as a gas generator for a hood-lifting device installed on the exterior of the vehicle.

13. A method of producing a gas generating agent molded product by molding the gas generating agent composition according to any one of claims 1-4.

14. The method of producing a gas generating agent molded product according to claim 13, wherein the gas generating agent composition is added and kneaded with water and then subjected to extrusion molding, followed by heat treatment.

15. The method of producing a gas generating agent molded product according to claim 14, wherein the heat treatment is heat treatment of 50-120 °C for 10-30 hours.

16. A hood-lifting device for lifting an automobile hood by using the gas generating agent molded product according to any one of claims 5-7.
